# EUROPÄISCHE PATENTSCHRIFT

(11) **EP 2 408 535 B1**
(45) Veröffentlichungstag und Bekanntmachung des Hinweises auf die Patenterteilung: **18.12.2013**
(21) Anmeldenummer: 09748929.8
(22) Anmeldetag: 02.10.2009
(51) Int. Cl.: B01D 46/00

(54) **FILTERVORRICHTUNG ZUR REINIGUNG EINES MIT PARTIKELN BELADENEN LUFTSTROMS**
FILTER DEVICE FOR CLEANING AN AIR STREAM LOADED WITH PARTICLES
DISPOSITIF DE FILTRAGE POUR ÉPURER UN FLUX D'AIR CHARGÉ DE PARTICULES

(30) Priorität: 29.10.2008 AT 16862008
(43) Veröffentlichungstag der Anmeldung: 25.01.2012
(73) Patentinhaber: Kappa Filter Systems GmbH, 4407 Steyr-Gleink (AT)
(72) Erfinder: KRÜGER, Klaus, A-4400 Steyr (AT)
(74) Vertreter: Burger, Hannes
(86) Internationale Anmeldenummer: PCT/AT2009/000379
(87) Internationale Veröffentlichungsnummer: WO 2010/048647

(56) Entgegenhaltungen:
- EP-A1- 0 830 886
- DD-A1- 234 796
- DE-A1- 2 419 604
- DE-A1- 19 946 320
- DE-U1-202007 002 868
- GB-A- 1 003 426

## Beschreibung

Die Erfindung betrifft eine Filtervorrichtung zur Reinigung eines mit Partikeln beladenen Luftstroms, wie sie im Oberbegriff des Anspruches 1 angegeben ist.

Eine gattungsgemäße Filtervorrichtung mit einer Mehrzahl von darin aufgenommenen Filterelementen ist vor allem zur großtechnischen Luftreinhaltung bzw. zur Vermeidung von unerwünscht hohen, die Umwelt bzw. Umgebung belastenden Partikel- bzw. Staubemissionen konzipiert, welche bei technischen Bearbeitungsprozessen bzw. bei chemischen Prozessen auftreten können. Vor allem im großindustriellen Anwendungsbereich, insbesondere in der großindustriellen Fertigung, ist eine Abluftreinigung bzw. ein Entstaubungssystem von hoher Wichtigkeit. Eine derartige Filtervorrichtung bewirkt die Luftreinhaltung am Arbeitsplatz sowie die Reinhaltung der Umgebungsbereiche des Produktionsstandortes. Solche großtechnischen Filtervorrichtungen werden bevorzugt außerhalb der eigentlichen Fertigungsräume bzw. Produktionshallen positioniert und können häufig Raumdimension oder sogar Dimensionen eines Einfamilien- oder Reihenhauses aufweisen. Die Gehäuse derartiger Filtervorrichtungen werden daher teilweise auch als Filterhäuser bezeichnet, welche im Wesentlichen in einen Filterraum und in einen darüber liegenden Service- bzw. Wartungsraum funktional unterteilt sind. Der Aufbau dieser Filtergehäuse ist in der Praxis durch eine Stahlkonstruktion bewerkstelligt, welche aus einer Mehrzahl von Stahlträgern und aus einem diese Stahlträger verkleidenden Gehäusemantel aus Stahlblech, insbesondere aus Well- oder Trapezblechen besteht. Im Hinblick auf die im Inneren des Filtergehäuses vorherrschenden Unterdruckverhältnisse sind relativ formbeständige Blechverkleidungen und/oder eine Mehrzahl von Versteifungen bzw. Stützstreben erforderlich, um membranartige Schwingungen der Blechverkleidungen gegenüber dem formstabilen Stahlgerüst zu vermeiden. Nachteilig ist weiters, dass derartige Stahlkonstruktionen bei größeren Filteranlagen hohen Montageaufwand verursachen können.

Die DD 234 796 A1 beschreibt eine gattungsgemäße Filtervorrichtung, welche zur Reinigung von größeren Mengen industrieller Gas-Partikel-Gemische mittels schlauchförmiger Filterelemente eingesetzt wird. In diesem Dokument wird dargelegt, die üblicherweise aus Stahl gefertigten Hauptbaugruppen einer Filtervorrichtung, insbesondere den Abscheiderkopf, das Gehäuse, das Stützgerüst und den Staubsammelbunker, durch direkte Materialsubstitution aus vorgefertigten Betonelementen zusammenzusetzen, sodass eine Filtervorrichtung aus Beton entsteht, bei der insbesondere die verwendete Menge an Stahl stark reduziert ist. Die Betonelemente des Gehäuses sind dabei mittels an den Eckpunkten der Elemente eingegossener und miteinander verschweißter Verbindungselemente untereinander verbunden. Das Gehäuse der Filtervorrichtung wird durch einzelne Stützen aus Beton getragen, zwischen denen der von einem unteren Abschnitt des Gehäuses gebildete, trichterförmige Staubsammelbunker aus Beton angeordnet ist. Der untere, trichterförmig zusammenlaufende Mantelabschnitt des Betongehäuses bildet also gleichzeitig auch den Staubsammelbunker der Filtervorrichtung aus.

Die GB 1 003 426 A beschreibt eine zylindrische Filtervorrichtung für Gas-Partikel-Gemische. Das hohlzylindrische Gehäuse der Filtervorrichtung, welches im Inneren mehrere Kammern aufweist, wird mittels Fließbeton und Gleitschalung gegossen, sodass ein im Wesentlichen einstückiges Gehäuse entsteht. Die im Inneren der Filtervorrichtung befindlichen, senkrecht stehenden Schlauchfilter werden von innen her mit dem zu reinigenden Rohgas beaufschlagt. Das Rohgas wird über einen Einlass in eine Versorgungskammer und von dort weiter über ein Verteilungselement in die einzelnen Filterkammern geleitet. Nach dem Filtern wird das gereinigte Gas über Auslässe an die Umgebung abgegeben. Ebenso sind Mittel vorgesehen, mit denen die Filterelemente gereinigt und die abgeschiedenen Partikel gesammelt und ausgetragen werden können. Ein Aufbau eines hohlzylindrischen Filtergehäuses aus mehreren Plattenelementen bzw. aus Betonfertigteilen ist in der GB 1 003 426 A nicht gezeigt.

Der vorliegenden Erfindung liegt die Aufgabe zu Grunde, eine Filtervorrichtung, insbesondere eine Luftentstaubungsvorrichtung mit hoher Filterleistung zu schaffen, welche langfristig mit hoher Zuverlässigkeit betrieben und dennoch möglichst kostengünstig aufgebaut werden kann.

Diese Aufgabe der Erfindung wird durch eine Filtervorrichtung mit den baulichen Maßnahmen gemäß Anspruch 1 gelöst.

Ein sich durch die Filtervorrichtung gemäß Anspruch 1 ergebender Vorteil liegt darin, dass ein derartiges Filtergehäuse gegenüber äußeren Witterungseinflüssen besonders beständig ist und auch längerfristig kaum witterungsbedingte Mängelerscheinungen im Hinblick auf optische und auf statische Aspekte entstehen. Neben diesem langfristig hohen Qualitätsniveau des beanspruchten Filtergehäuses ist die Errichtung desselben aufgrund eines relativ hohen Vorfertigungsgrades rasch und möglichst kostengünstig durchführbar. Insbesondere können die einzelnen Plattenelemente in Form von Betonfertigteilen durch Lastenkräne rasch und ausreichend positionsgenau aneinander gereiht werden und so zumindest den Mantelabschnitt, insbesondere die Begrenzungswände des Filtergehäuses bilden. Neben einer relativ unproblematischen Montage und Errichtung des Filtergehäuses mittels einer Mehrzahl von Betonplatten, bietet ein derartiges Filtergehäuse den Vorteil einer wesentlich verbesserten Säurebeständigkeit im Vergleich zu herkömmlichen Stahlgehäusen. Insbesondere bei einer Filterung von Aerosolen bzw. von Rohgasen mit wässrigen oder sauren Schwebebestandteilen weist das angegebene Filtergehäuse ein deutlich besseres Verhalten im Hinblick auf Korrosion und Säurebeständigkeit auf. Außerdem können abrasive Schwebebestandteile im zugeführten, zu filternden Rohgas nicht zu einer Verschlechterung der Korrosionsbeständigkeit des Filtergehäuses führen. Im Hinblick auf die übliche Einsatzzeitdauer des angegebenen Filtergehäuses aus Betonteilen sind die Aufwendungen für Korrosionsschutz im Vergleich zu herkömmlichen Filtergehäusen aus Eisen bzw. Stahl minimal. Ein weiterer, wesentlicher Vorteil der angegebenen Filtervorrichtung liegt darin, dass eine verbesserte Schalldämmung, insbesondere im Hinblick auf Schallemissionen erzielbar ist, welche im Inneren des Filtergehäuses durch den Filterbetrieb bzw. durch azyklische oder periodische Abreinigungsvorgänge entstehen, nachdem solche Abreinigungsvorgänge beispielsweise durch Anwendung von Pressluft gegenüber den Filterelementen ausgeführt werden und entsprechenden Lärm verursachen. D.h., dass das angegebene Filtergehäuse bereits ohne schalldämmende Zusatzmaßnahmen im Vergleich zu Stahlkonstruktionen eine bessere Schalldämmwirkung aufweist. Insbesondere können zusätzliche Maßnahmen, wie z.B. aufwändige, schalldämmende Verkleidungen oder strömungstechnische Maßnahmen zur Geräuschminimierung in vielen Fällen erübrigt werden. Darüber hinaus ist das beanspruchte Filtergehäuse auch zur Behandlung von Gas- bzw. Luftströmungen mit relativ hohen bzw. schwankenden Temperaturen problemlos geeignet. Außerdem können Gas- bzw. Luftströmungen mit relativ hohen Temperaturen von bis zu 600°C problemlos durch das Gehäuse der Filtervorrichtung geleitet werden und ist dabei eine bessere Kontrollierbarkeit des erforderlichen bzw. einzuhaltenden Temperaturbereiches für die jeweilige Gas- bzw. Luftströmung erreicht, sodass der Filtervorrichtung vor- bzw. nachgeschaltete Anlagen prozessstabiler bzw. effizienter betrieben werden können. Auch taupunktbedingte Niederschläge bzw. Absonderungen aus dem gefilterten Gas- bzw. Luftstrom an den Betonwandungen der beanspruchten Filtervorrichtung sind im Vergleich zu bislang üblichen Umhausungen aus Stahl oder Eisen relativ unkritisch bzw. zumindest etwas niedriger. D.h., dass die angegebene Filtervorrichtung auch im Hinblick auf etwaige Kondensatbildungen besondere Vorteile erzielt. Zudem bietet die angegebene Filtervorrichtung auch bei explosionsgefährdeten Prozessen deutliche Vorteile, nachdem die explosionsbezogene Stoß- bzw. Druckstoßfestigkeit des Gehäuses aus Beton-Plattenelementen im Vergleich zu herkömmlichen Stahlkonstruktionen besser ist. Ferner bieten die aneinander gereihten Plattenelemente eine ausreichend hohe Flexibilität in der Gestaltung der Körperform des Gehäuses und sind großvolumige Fütergehäuse ohne statische Probleme aufzubauen. Auch der Transport der Plattenelemente für das jeweilige Filtergehäuses kann relativ platzsparend erfolgen, sodass möglichst wenige Transportfahrten erforderlich sind. Darüber hinaus ist der Werkstoff Beton nahezu unerschöpflich und können entsprechende Plattenelemente an einer Vielzahl von Produktionsstätten gefertigt werden, wohingegen Stahl- und Blechelemente nur an vergleichsweise wenigen Standorten produziert und entsprechend verarbeitet werden können. Demnach bietet die beanspruchte Filtervorrichtung auch ökologische Vorteile.

Ein Vorteil der erfindungsgemäßen Maßnahmen ist auch, dass nach dem Aufbau der Gehäuse-Wandabschnitte aus Betonfertigteilen die Funktionsbaugruppen der Filtervorrichtung einfach und rasch im entsprechend vorbereiteten Filtergehäuse installiert werden können. Insbesondere können dadurch modulartige bzw. vorgefertigte Funktionsbaugruppen der Filtervorrichtung, wie zum Beispiel Sammel- und/oder Austragungsvorrichtungen, der so genannte Filterkopf zur Halterung der Filterelemente, eine allfällige Abreinigungsvorrichtung und dergleichen, einfach in das Filtergehäuse gehoben und stufenlos positioniert werden und sodann an den entsprechenden Positionen bzw. Modulebenen mit den Betonwandungen des Filtergehäuses verbunden werden.

Von Vorteil ist auch eine Weiterbildung nach Anspruch 2, da dadurch die jeweiligen Funktionsbaugruppen bevorzugt ausgehend von der Oberseite des Gehäuses in das Innere des hohlkörperartigen Betongehäuses eingesetzt werden können und an der jeweils vorgesehen SollPosition mit den Begrenzungswänden aus Beton sicher und langfristig zuverlässig verbunden werden können. Ein weiterer Vorteil liegt darin, dass die jeweiligen Funktionsbaugruppen ausgehend von der Oberseite des schachtartigen Filtergehäuses mühelos in das Gehäuseinnere gehoben werden können, ohne dass erhöhte Positioniergenauigkeit erforderlich ist. Insbesondere kann dadurch ein baubedingter Toleranzausgleich erzielt werden und kann eine möglichst verspannungsfreie bzw. verwindungsfreie Montage der Funktionsbaugruppen im Inneren des Betongehäuses vorgenommen werden.

Durch die Maßnahmen gemäß Anspruch 3 werden individuelle Lösungen bzw. bedarfsgerechte Größen von Filtervorrichtungen ermöglicht und ist außerdem eine rasche Montage des Filtergehäuses bzw. eine kurzfristige Inbetriebnahme der Filtervorrichtung möglich.

Durch die Maßnahmen gemäß Anspruch 4 wird der Vorfertigungsgrad des Filtergehäuses erhöht, sodass nachträgliche Bearbeitungen am Aufstellungsort der Filtervorrichtungen auf ein Minimum reduziert sind.

Durch die Maßnahmen gemäß Anspruch 5 können großvolumige, insbesondere raumgroße oder gebäudeähnliche Filtergehäuse geschaffen werden, ohne dass die Errichtung oder die Montage eines derartigen Filtergehäuses an transport- oder hebetechnische Grenzen stößt.

Durch die Maßnahmen gemäß Anspruch 6 wird das Filtergehäuse in einfacher Art und Weise in einen Filterraum und in einen benachbarten bzw. angrenzenden Verteiler- und Sammelraum für zuzuführende und abzuführende Luftströmungen unterteilt. Ein wesentlicher Vorteil liegt auch darin, dass diese Trennwand aus Betonelementen die statische Belastbarkeit bzw. die Tragfähigkeit des hohlkörperartigen Betongehäuses erhöht.

Durch die Maßnahmen gemäß Anspruch 7 wird ein erhöhter Vorfertigungsgrad des Filtergehäuses erzielt. Insbesondere wird dadurch eine Strömungsverbindung zwischen der Verteilerkammer und der Filterkammer und andererseits eine Strömungsverbindung zwischen der Filterkammer und der in Strömungsrichtung nachgeschalteten Sammelkammer für das gefilterte Reingas aufgebaut. Der Bearbeitungsaufwand am Aufstellungsort der Filtervorrichtung wird dadurch minimiert, sodass möglichst kurze Montage- bzw. Errichtungszeiten erzielbar sind.

Durch die Maßnahmen gemäß Anspruch 8 wird eine kurzfristige Inbetriebnahme der Filtervorrichtung erzielt, nachdem die modulare Filterbaugruppe, insbesondere der so genannte Filterkopf, rasch und relativ fehlersicher in das vorbereitete Gehäuse aus einzelnen BetonPlattenelementen eingesetzt werden kann.

Durch die Maßnahmen gemäß Anspruch 9 wird eine hohe Filterleistung erzielt, wodurch sich vor allem industrielle Filteranlagen überaus funktionszuverlässig und mit hoher Filterperformance errichten lassen. Außerdem sind die Betriebs- und Wartungskosten einer derartigen Filtervorrichtung relativ niedrig.

Durch die Maßnahmen gemäß Anspruch 10 wird oberhalb der Filterkammer ein Service- bzw. Wartungsraum geschaffen, der den Anforderungen an die Platzverhältnisse möglichst kostengünstig gerecht wird. Insbesondere kann dabei der Service- bzw. Wartungsraum gleichzeitig durch jene Betonfertigteile gebildet sein, die auch die Filterkammer bilden. Insbesondere können die oberen Endabschnitte der Betonfertigteilelemente die Außenumgrenzung bzw. die Wandungen des Service- bzw. Wartungsraums darstellen. Der Errichtungsaufwand für den Service- bzw. Wartungsraum und die damit verbundenen Kosten werden dadurch möglichst gering gehalten.

Zum besseren Verständnis der Erfindung wird diese anhand der nachfolgenden Figuren näher erläutert.

Es zeigen jeweils in vereinfachter, stark schematisierter Darstellung:
- Fig. 1: ein Ausführungsbeispiel eines Filtergehäuses aus aneinander gereihten Platten-elementen aus Beton in vereinfachter, perspektivischer Darstellung;
- Fig. 2: das Filtergehäuse gemäß Fig. 1 ohne Dach- bzw. Deckelelement in schematischer Explosionsdarstellung bezüglich seiner Begrenzungswände bzw. Mantelabschnitte;
- Fig. 3: das Filtergehäuse nach Fig. 1 ohne Dach- bzw. Deckelelement in Ansicht von oben;
- Fig. 4: das Filtergehäuse nach Fig. 3 geschnitten gemäß den Linien IV - IV in Fig. 3;
- Fig. 5: die Innenseite der Frontwand des Filtergehäuses, geschnitten gemäß den Linien V - V in Fig. 3;
- Fig. 6: das Filtergehäuse nach Fig. 1, geschnitten gemäß den Linien VI - VI in Fig. 3 in Verbindung mit phantomartig angedeuteten Funktionsbaugruppen der Filtervorrichtung;
- Fig. 7: einen auszugsartigen Vertikalschnitt durch ein Plattenelement des Filtergehäuses;
- Fig. 8: eine andere Ausführungsform von aneinander gereihten Plattenelementen aus Beton zur Schaffung von Wandabschnitten des Filtergehäuses;
- Fig. 9: eine weitere Ausführungsform zur Verbindung zweier aneinander gereihter Plattenelemente aus Beton mittels gegenseitig koppelndem Fließbeton zwischen den Schmal- bzw. Stirnseiten der benachbarten Plattenelemente.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

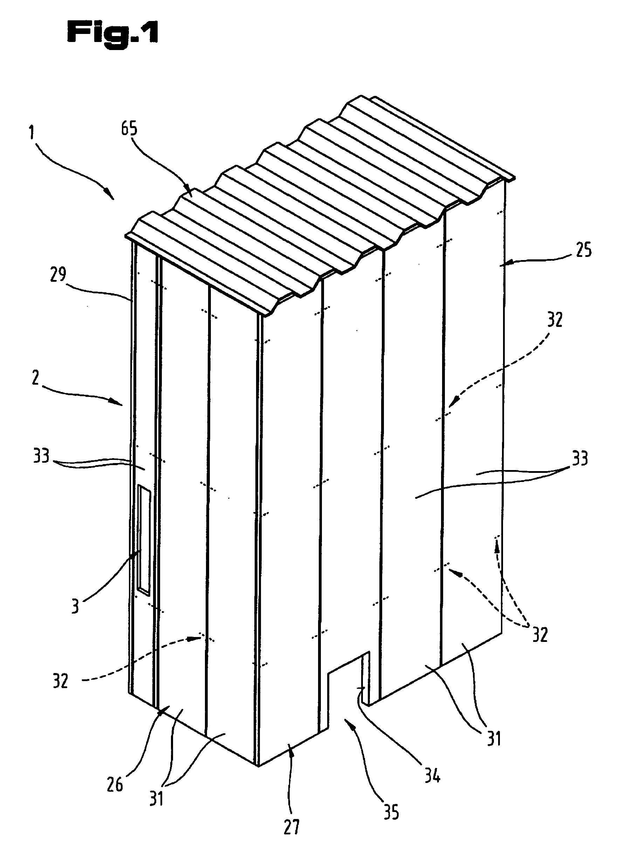

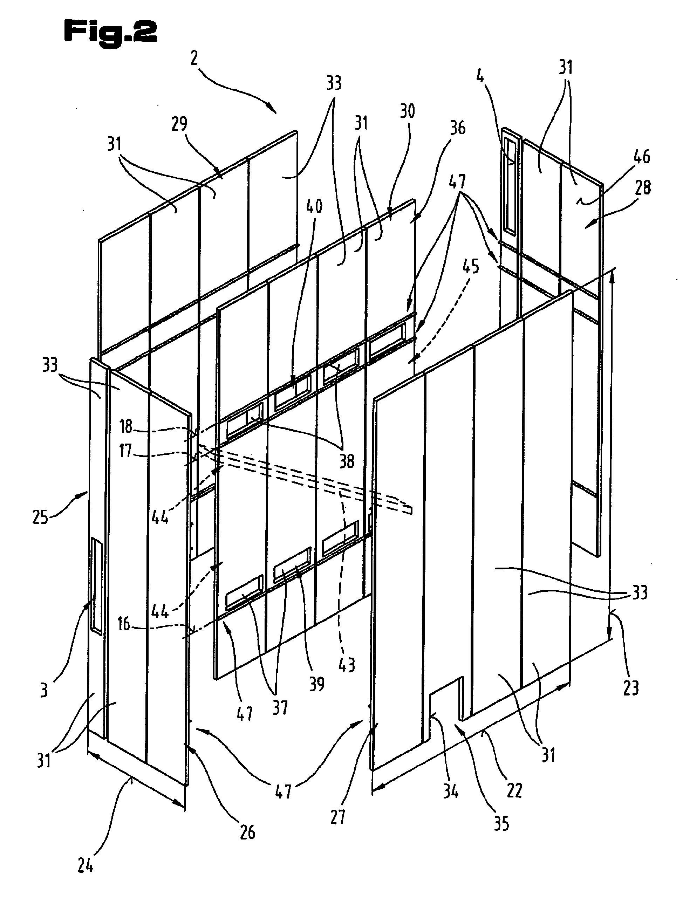

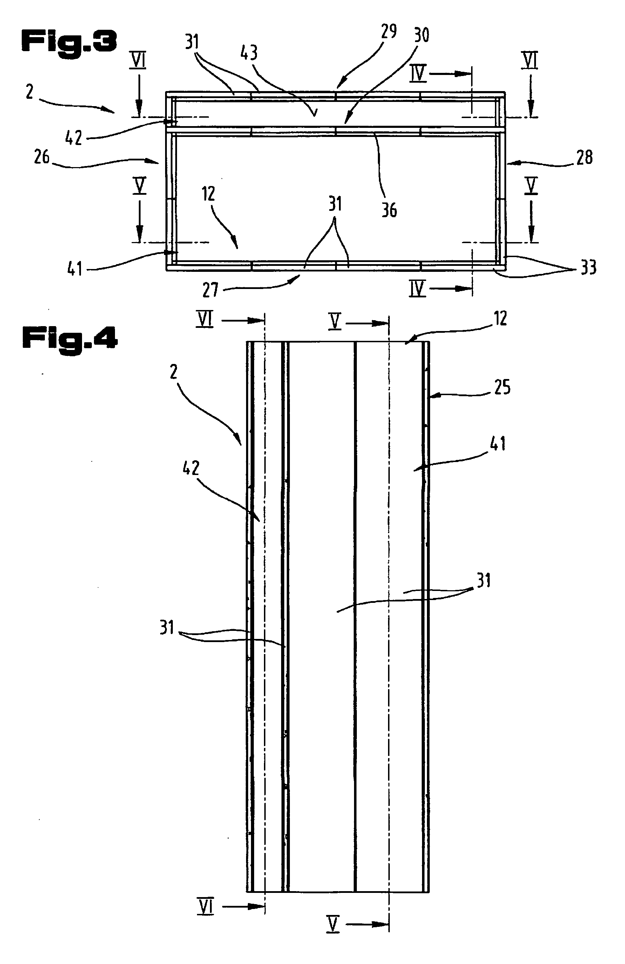

In den Fig. 1 bis 6 ist eine Filtervorrichtung 1 zur Reinigung eines mit Partikeln beladenen Luftstroms schematisch veranschaulicht. Diese Filtervorrichtung 1 umfasst ein Gehäuse 2 mit einer Lufteintrittsöffnung 3 für verunreinigte Luft. Diese Lufteintrittsöffnung 3 dient beispielsweise unter Einsatz von flanschartigen Anschlussmitteln zur strömungstechnischen Verbindung mit einer nicht dargestellten Zuleitung für mit Partikeln beladenes Rohgas. Ferner umfasst das Gehäuse 2 eine Luftaustrittsöffnung 4 für die gereinigte bzw. gefilterte Luft, welche nachfolgend auch als Reinluft bezeichnet wird. Selbstverständlich ist es im Rahmen der Erfindung auch möglich, anstelle der Reinigung, insbesondere der Filterung von Luft, auch sonstige Gase bzw. Gasmischungen mittels der beanspruchten Filtervorrichtung 1 zu behandeln.

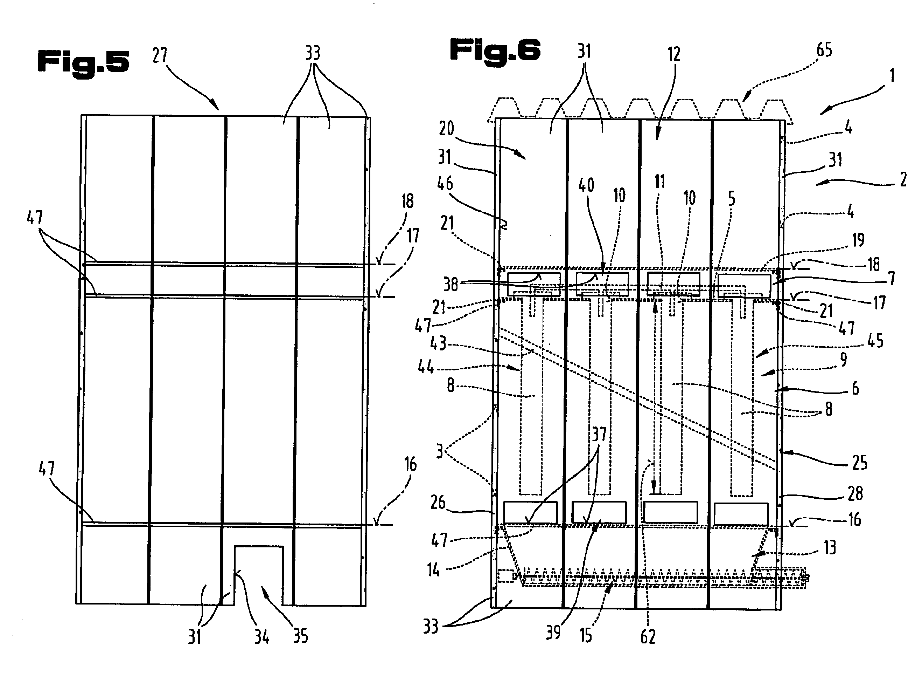

Eine funktionsbereite Filtervorrichtung 1 umfasst weiters eine bevorzugt horizontal verlaufende oder auch geneigt ausgerichtete Trennplatte 5, welche das Gehäuse 2 in eine Schmutzluftkammer 6 und in eine Reinluftkammer 7 unterteilt, wie dies am besten aus Fig. 6 ersichtlich ist.

Zudem umfasst die Filtervorrichtung 1 wenigstens ein Filterelement 8, welches an der Trennplatte 5 derart gehaltert bzw. montiert ist, dass es in die Schmutzluftkammer 6 ragt und eine filternde Luftstrümungsverbindung zwischen der Schmutzluftkammer 6 und der Reinluftkammer 7 aufbaut. Bevorzugt ist die Reinluftkammer 7 oberhalb der Schmutzluftkammer 6 vorgesehen. Die Funktion der Filtervorrichtung 1 ist derart, dass die Partikel bzw. Schwebebestandteile innerhalb des zugeführten Gas- bzw. Luftstromes mittels den Filterelementen 8 zumindest in einem bestimmten Ausmaß an den Filterelementen 8 abgesondert bzw. abgeschieden werden und der entsprechend gereinigte bzw. gefilterte Gas- bzw. Luftstrom ausgehend von der Reinluftkammer 7 von der Filtervorrichtung 1 abgeleitet bzw. in die Umgebung der Filtervorrichtung 1 entweichen kann. Die aus dem Luftstrom abgeschiedenen Partikel bzw. Festktirperteilchen werden dabei an den Filterflächen zurückgehalten bzw. bleiben die abzuscheidenden Partikel im Filtermedium der Filterelemente 8 quasi hängen. Die die eigentliche Filterfunktion der Filtervorrichtung 1 erfüllende Baugruppe kann als separates Funktionsmodul, insbesondere als Filterungsmodul 9 ausgeführt sein. Dieses Filterungsmodul 9 umfasst im Wesentlichen die Trennplatte 5 mit einer Mehrzahl von Durchbrüchen 10 zur Aufnahme bzw. zum Einsetzen von jeweils einem Filterelement 8 und gegebenenfalls wenigstens ein Dichtelement zur Vermeidung von so genannten Falschluftströmungen bzw. Strömungskurzschlüssen zwischen der Schmutzluftkammer 6 und der Reinluftkammer 7. Das Filterungsmodul 9 kann weiters Elemente einer Abreinigungsvorrichtung 11, beispielsweise Düsenelemente, Rohrleitungen und/oder Druckerzeugungs- bzw. Speichervorrichtungen fur Druckluft umfassen, um eine bedarfsweise Reinigung der Filterelemente 8 zu ermöglichen. Diese Abreinigungsvorrichtung 11 für die Filterelemente 8 kann aber auch als eigenständige Baugruppe bzw. als gesondertes Funktionsmodul ausgeführt sein.

Ein derartiges Baugruppenmodul, insbesondere das Filterungsmodul 9, welches zumindest die Trennplatte 5 umfasst, wird beim angegebenen Gehäuse 2 bevorzugt ausgehend von einem oberen Durchbruch 12 in das Gehäuse 2 eingesetzt und an der entsprechenden Position im Inneren des Gehäuses 2 befestigt.

Eine weitere zumindest teilweise vorgefertigte Funktionsbaugruppe der Filtervorrichtung 1 kann durch eine Sammel- und/oder Austragungsvorrichtung 13 gebildet sein. Eine derartige Sammel- und/oder Austragungsvorrichtung 13 umfasst eine trog- oder trichterartige Auffangwanne 14, in welcher aus dem Luftstrom abgeschiedene bzw. von den Filterelementen 8 abfallende Partikel bzw. Abscheidungsstoffe gesammelt werden. Gegebenenfalls umfasst die Sammel- und/oder Austragungsvorrichtung 13 auch eine Fördervorrichtung 15, welche beispielsweise durch einen Schneckenförderer, ein Schieberelement zum Ausstoßen der Partikelansammlungen und/oder durch eine einfache Entleerungsöffnung gebildet sein kann. Die jeweilige Fördervorrichtung 15 ist dazu vorgesehen, um in der Auffangwanne 14 bzw. an einem unteren Auffangboden angesammelte Partikel bei Bedarf automatisiert oder teilweise automatisiert abzufardern bzw. aus der Filtervorrichtung 1 entfernen zu können. Auch diese Sammel- und/oder Austragungsvorrichtung 13 wird bevorzugt ausgehend vom oberen Durchbruch 12 in das Gehäuse 2 eingesetzt, wobei die Sammel- und/oder Austragungsvorrichtung 13 in einer untersten bzw. niedrigsten Modulebene 16 im Gehäuse 2 gehaltert ist. Oberhalb der untersten Modulebene 16 ist eine weitere Modulebene 17 vorgesehen, in welcher das Filterungsmodul 9, insbesondere dessen Trennplatte 5 gehaltert ist.

Oberhalb dieser zweiten Modulebene 17, innerhalb welcher die zumindest eine Trennplatte 5 gehaltert ist, kann eine dritte Modulebene 18 ausgeführt sein, welche ein Bodenelement 19 eines Service- bzw. Wartungsraumes 20 bildet. Dieser Service- bzw. Wartungsraum 20 weist dabei zumindest Personenhöhe, insbesondere eine Höhe von mehr als 1,6 Meter auf. Der entsprechende Service- bzw. Wartungsraum 20 ist dabei innerhalb des Gehäuses 2 ausgebildet und im Abschnitt oberhalb der Trennplatte 5 vorgesehen. Das zumindest eine Bodenelement 19 des Service- bzw. Wartungsraums 20 wird bevorzugt ebenso ausgehend vom oberen Durchbruch 12 in das Gehäuse 2 eingesetzt und innerhalb der dritten bzw. obersten Modulebene 18 gehaltert. Das Bodenelement 19 kann podestartig ausgeführt sein und/oder eine Mehrzahl von Durchbrüchen bzw. Klappen aufweisen, um ausgehend von der unterhalb positionierten Trennplatte 5 zeitweise erforderliche Service- und/oder Wartungsarbeiten an den Filterelementen 8 vornehmen zu können. Das Bodenelement 19 stellt dabei einen möglichst luftdichten, oberen Abschluss der Reinluftkammer 7 dar, sodass über das Bodenelement 19 möglichst keine Fremd- bzw. Falschluft in die Reinluftkammer 7 einströmt, nachdem in der Reinluftkammer 7 im Vergleich zur peripheren Umgebung um die Filtervorrichtung 1 deutliche Druckunterschiede vorliegen, insbesondere erheblicher Unterdruck vorherrscht. Hierfür ist das Bodenelement 19 über wenigstens ein Dichtelement 21 gegenüber den inneren Wandflächen oder gegenüber flanschartigen Abstützungen an den Innenflächen des Gehäuses 2 abgedichtet. Ähnlich der Trennplatte 5 kann selbstverständlich auch das Bodenelement 19 aus mehreren, klapp- oder abhebbaren Deckelelementen gebildet sein.

Zur Erzielung einer Rohgasströmung mit entsprechender Strömungsgeschwindigkeit bzw. ausreichendem Strömungsvolumen ist bevorzugt reingasseitig zur Filtervorrichtung 1 zumindest ein nicht dargestellter Unterdruckerzeuger, insbesondere ein Absaugungsgebläse für Stäube bzw. Partikel angeordnet

Die Filtervorrichtung 1 dient zur Abscheidung von schwebenden Partikeln aus einem Gas- bzw. Luftstrom, insbesondere aus so genannten Aerosolen. Die Filtervorrichtung 1 weist dabei ein Gehäuse 2 auf, welches raum- oder hausähnliche Dimensionen aufweist. Insbesondere weist das Gehäuse 2 eine Breite 22 von mehr als 3 Metern, insbesondere bis zu 15 Metern, üblicherweise in etwa 9 Meter auf. Eine Höhe 23 des Gehäuses 2 beträgt mehr als 2 Meter, insbesondere bis zu 20 Meter, üblicherweise in etwa 15 Meter. Eine Tiefe 24 beträgt zumindest 2 Meter, insbesondere bis zu 10 Meter, üblicherweise in etwa 5 Meter. An diesen raum- bzw. häuserartigen Dimensionen des Gehäuses 2 ist erkennbar, dass die Filtervorrichtung 1 vor allem für großindustrielle Filterungszwecke, insbesondere für Entstaubungsanlagen bzw. zur Luftreinhaltung in Arbeits- bzw. Fabriksumgebungen konzipiert ist.

Wesentlich ist, dass zumindest der Wand- bzw. Mantelabschnitt 25, insbesondere Begrenzungswände 26 bis 30 eines quaderförmigen Gehäuses 2 durch aneinander gereihte Plattenelemente 31 aus Beton gebildet ist bzw. sind. Die aneinander gereihten Plattenelemente 31 aus Beton bilden dabei die Außenumgrenzung bzw. die äußere Umhausung der Filtervorrichtung 1 aus.

Entsprechend einer ersten Ausführungsform sind die einzelnen, aneinander gereihten Plattenelemente 31 via Verbindungselemente 32, beispielsweise mittels Schraub- und/oder Formschlussverbindungen miteinander verbunden, um so zumindest eine der Begrenzungswände 26 bis 30 zu bilden. Ein Übergangsabschnitt zwischen zwei aneinander gereihten Plattenelementen 31 kann dabei durch formschlüssige Verbindungen, beispielsweise durch Nut- bzw. Federverbindungen oder durch einfache Falzverbindungen gebildet sein, welche gegebenenfalls mittels zusätzlicher Schraub- oder Klemmverbindungen entsprechend gekoppelt werden, sodass eine unerwünschte Trennung zwischen aneinander gereihten Plattenelementen 31 ausgeschlossen ist

Die einzelnen Plattenelemente 31 sind bevorzugt durch nach Bauplan vorproduzierte Betonfertigteile 33 gebildet. Wenigstens eines der Plattenelemente 31 weist eine Aussparung 34 bzw. einen Durchbruch zur Bildung eines Wartungs- oder Reinigungszuganges 35 auf. Über diese Aussparung 34 kann Wartungs- bzw. Bedienungspersonal in den Innenraum der Filtervorrichtung 1 eintreten und beispielsweise Wartungs- oder Kontrollarbeiten an der Sammel- und/oder Austragungsvorrichtung 13 vornehmen. Dieser Wartungs- oder Reinigungszugang 35 ist bevorzugt mittels einer Tür oder Klappe hinsichtlich seiner Zugänglichkeit versperrund freigebbar. Diese nicht dargestellte Tür ist vorzugsweise aus Stahl, insbesondere aus Eisen gebildet.

Entsprechend der vorteilhaften, dargestellten Ausführungsform ist innerhalb des Gehäuses 2 zumindest eine vertikal ausgerichtete Trennwand 36 ausgebildet, welche hierbei durch die Begrenzungswand 30 definiert ist. Auch diese Trennwand 36, deren Breite in etwa der Breite 22 des Gehäuses 2 entspricht, umfasst wenigstens ein Plattenelement 31 aus Beton. Bevorzugt ist die Trennwand 36 durch eine Mehrzahl von aneinander gereihten Plattenelementen 31 gebildet, um so ein flächiges Begrenzungselement aus Betonwerkstoff zu bilden. Üblicherweise jedes dieser Plattenelemente 31 weist zumindest einen Durchbruch 37, 38 auf. Bevorzugt sind je Plattenelement 31 zwei in Vertikalrichtung zueinander beabstandete Durchbrüche 37, 38 vorgesehen. Der wenigstens eine Durchbruch 37 bildet dabei einen so genannten Überströmkanal bzw. Einströmkanal 39 in die Schmutzluftkammer 6 aus, während der zumindest eine Durchbruch 38 einen Überströmkanal bzw. Ausströmkanal 40 für gereinigte Luft aus der Reinluftkammer 7 darstellt. Die innerhalb des Gehäuses 2 vertikal ausgerichtete Trennwand 36 unterteilt das Gehäuse 2 in eine hinsichtlich des Raumvolumens relativ große Filterkammer 41 und in eine vergleichsweise kleine bzw. schmale Verteiler- und Sammelkammer 42 für das zugeführte Rohgas und das nachfolgend abzuführende Reingas. Ein Trennsteg 43, welcher aus Beton, Stahlblech oder Kunststoff gebildet sein kann, unterteilt die Verteiler- und Sammelkammer 42 in einen Verteilerraum 44 für zugeführtes Rohgas und in einen Sammelraum 45 für behandeltes, insbesondere gefiltertes Reingas, welches über die jeweiligen Durchbrüche 38 aus der Reinluftkammer 7 in den Sammelraum 45 übergeleitet und zusammengeführt wird und dort für eine gemeinsame Ableitung, beispielsweise über einen Abluftkamin, bereitsteht. Dem gegenüber wird das Rohgas über die Lufteintrittsöffnung 3 in den Verteilerraum 44 eingeleitet und ausgehend vom Verteilerraum 44 über die Durchbrüche 37 entsprechend verteilt in die Schmutzluftkammer 6 überführt. Der Verteilerraum 44 bewirkt, dass mit nur einer Lufteintrittsöffnung 3 für das Rohgas eine möglichst gleichmäßige Verteilung der Schmutzluft gegenüber den Filterelementen 8 in der Schmutzluftkammer 6 erzielt wird. Analog dazu wird mittels dem in Bezug auf die Strömungsrichtung der Reinluftkammer 7 nachgeschalteten Sammelraum 45 eine gemeinsame bzw. zentrale Ableitung der behandelten Luftströmung, insbesondere des Reingases über nur eine Luftaustrittsöffnung 4 bzw. über nur einen, seitlich zum Gehäuse 2 positionierten, nicht dargestellten Abluftkamin ermöglicht.

Die einzelnen, bevorzugt den Mantelabschnitt 25 des quaderförmigen Gehäuses 2 bildenden Plattenelemente 31 werden vorzugsweise am Aufstellungsort, d.h. an Ort und Stelle der Filtervorrichtung 1 zusammengesetzt bzw. aneinandergereiht, um das Gehäuse 2 der Filtervorrichtung 1 zu bilden. Für die Aneinanderreihung der einzelnen, nach Plan vorgefertigten Plattenelemente 31 aus Beton sind standardmäßige Hebemittel, insbesondere mobile Lastenkräne in einfacher Art und Weise einsetzbar.

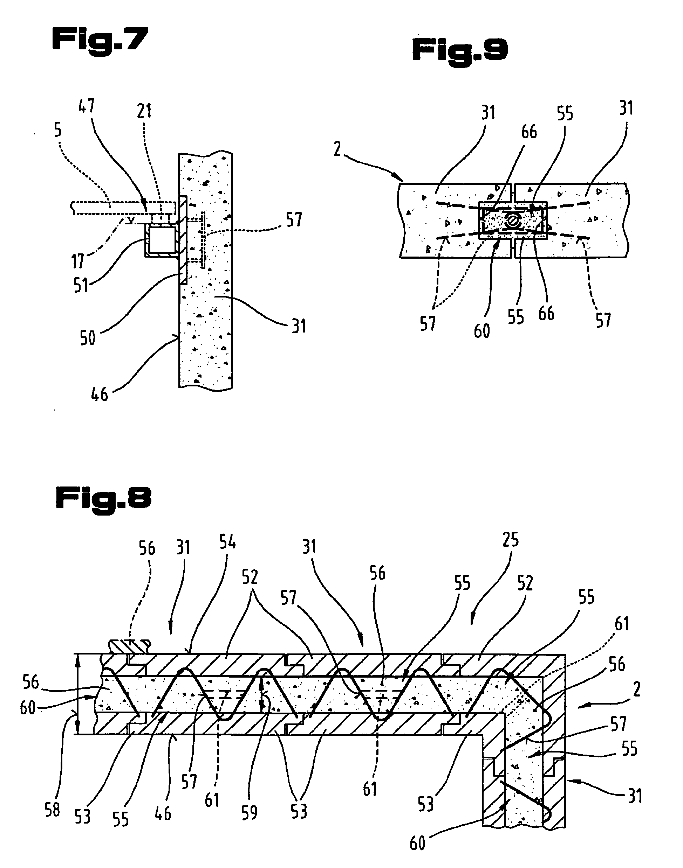

Zur zuverlässigen Halterung und raschen Montierbarkeit der einzelnen Funktionsbaugruppen der Filtervorrichtung 1, wie zum Beispiel der Trennplatte 5 und/oder der Sammel- und/oder Austragungsvorrichtung 13 und/oder des Bodenelementes 19 für den Service- bzw. Wartungsraum 20 ist wenigstens eine, zumindest von der inneren Wandfläche 46 eines Plattenelementes 31 stufenartig vorspringende Konsole 47 ausgebildet, wie dies in Fig. 7 schematisch dargestellt wurde. An der Oberseite dieser Abstütz-Konsole 47, welche als Eisen-Konsole ausgeführt sein kann, kann ein Dichtelement 21 ausgebildet sein, wie dies in strichlierten Linien dargestellt und vorhergehend bereits beschrieben wurde.

Es ist auch möglich, die Konsole 47 als eine in zumindest ein Plattenelement 31 aus Beton partiell eingegossene Eisen-Konsole auszuführen. In diesem Fall ragt ein Teilabschnitt eines Stahl- bzw. Eisenprofils, beispielsweise eines Winkelprofils, gegenüber der inneren Wandfläche 46 des Plattenelementes 31 leisten- bzw. konsolenartig vor und dient dessen Oberseite zur Abstützung der jeweiligen Funktionsbaugruppe der Filtervorrichtung 1, wie dies in Fig. 7 beispielhaft dargestellt wurde.

Wie weiters am besten aus Fig. 7 ersichtlich ist, kann zur Halterung der jeweiligen Funktionsbaugruppe innerhalb des Beton-Gehäuses 2 zumindest ein Plattenelement 31 wenigstens eine integral verankerte, insbesondere eine partiell eingegossene Eisenplatte 50 zum Verbinden, insbesondere zum Anschweißen oder Anschrauben einer Funktionsbaugruppe, insbesondere von Rahmen- bzw. Trägerelementen 51 einer Funktionsbaugruppe der Filtervorrichtung 1 aufweisen. Eine derartige Eisenplatte 50 zum Anschrauben oder Anschweißen einer Funktionsbaugruppe ist zur Wandfläche, insbesondere zur inneren Wandfläche 46 des jeweiligen Beton-Plattenelementes 31 stufenlos, insbesondere flächenbündig ausgerichtet, wie dies in Fig. 7 schematisch veranschaulicht wurde.

Entsprechend einer Ausführungsform, wie sie in den Fig. 7 gezeigt ist, sind die nach Bauplan vorgefertigten Plattenelemente 31 durch Voll- bzw. Massivkörper aus Beton gebildet. Eine Mehrzahl von solchen, aneinander gereihten Plattenelementen 31 bildet dabei die jeweiligen Begrenzungswände 26 bis 29 und/oder die Trennwand 36 des Gehäuses 2 der Filtervorrichtung 1 aus.

In Fig. 8 ist eine weitere Ausführungsform zur Bildung der Wand- bzw. Mantelabschnitte 25 des Gehäuses 2 veranschaulicht. Die einzelnen Plattenelemente 31 zur Bildung des Gehäuses 2 sind dabei durch jeweils zwei zueinander beabstandete Wandelemente 52, 53 gebildet, wobei das erste Wandelement 52 eine äußere Wandfläche 54 des Gehäuses 2 bildet und das zweite Wandelement 53 die innere Wandfläche 46 des Gehäuses 2 definiert. Insbesondere sind die Plattenelemente 31 durch zwei zueinander beabstandete Wandelemente 52, 53 mit dazwischen liegendem Freiraum zum Ausgießen mit Fließbeton 55 gebildet. Dieses Ausgießen mit Liefer- bzw. Fließbeton 55 erfolgt bevorzugt erst am entsprechenden Aufstellungsort der Filtervorrichtung 1 und zwar nachdem die einzelnen Plattenelemente 31 aneinandergereiht und in die entsprechende gehäuse- bzw. mantelartige Position gebracht wurden. Dieser Ort- bzw. Fließbeton 55 kann in einfacher und effizienter Art und Weise mittels standardmäßiger Beton-Pumpvorrichtungen in die Zwischen- bzw. Freiräume zwischen den vorbereitend aneinander gereihten Plattenelementen 31, insbesondere zwischen die Wandelemente 52, 53 eingegossen werden und nachfolgend entsprechend aushärten bzw. verfestigen. Die aus einzelnen Plattenelementen 31 zusammengesetzten Begrenzungswände 26 bis 30 - Fig. 1- des Gehäuses 2 erreichen dadurch eine hohe Stabilität und eine zuverlässige Gas- bzw. Luftdichtheit innerhalb kurzer Aufbauzeiten. Außerdem können dadurch mit standardmäßigen bzw. kostengünstigen Lastenkränen großvolumige Gehäuse 2 errichtet werden, nachdem die Massen der vorgefertigten Beton-Plattenelemente 31 gering gehalten werden können.

Zur Erhöhung der Wärmedämmwirkung des Gehäuses 2 kann der Fließbeton 55 wenigstens einen Zusatzstoff aus wärmedämmendem Material, insbesondere granulatartige Dämmstoffe 56, beispielsweise aus Polystyrol oder Perlit aufweisen. Das wärmedämmende Material ist bevorzugt dem Fließbeton 55 in seinem fließfähigen Zustand beigemischt. Die jeweiligen wärmedämmenden Zuschlagsstoffe können durch beliebige, aus dem Stand der Technik bekannte granulat- oder kornförmige Dämmstoffe 56 gebildet sein.

Alternativ oder in Kombination dazu ist es in einfacher Art und Weise auch möglich, an den äußeren Wandflächen 54 der Beton-Plattenelemente 31 plattenartige Dämmstoffe 56, beispielsweise Polystyrol- oder PU-Platten anzubringen, wie dies in strichlierten Linien angedeutet wurde. Plattenartige Dämmstoffe 56 sind vor allem dann von Nutzen, wenn für das Gehäuse 2 der Filtervorrichtung 1 erhöhte Anforderungen an die Wärmedämmwirkung bestehen.

Entsprechend einer bevorzugten Ausführungsform sind die zueinander beabstandeten Wandelemente 52, 53 der einzelnen Plattenelemente 31 durch eine Bewehrung 57 aus Eisen einstückig miteinander verbunden. Diese Verbindung der Wandelemente 52, 53 mittels der Bewehrung 57 ist derart ausgeführt, dass die Wandelemente 52, 53 in einer die Wandstärke 58 des Gehäuses 2 definierenden Distanz 59 gehaltert sind. Diese Distanz 59 ist ein Maß für den mit Fließbeton 55 auszufüllenden Frei- bzw. Zwischenraum 60 zwischen den beiden parallel zueinander ausgerichteten Wandelementen 52, 53. Wie weiters aus Fig. 8 ersichtlich ist, kann auch eine Eckverbindung zwischen zwei winkelig zueinander ausgerichteten Plattenelementen 31 durch erstarrten Fließbeton 55 gebildet sein, welcher in den die aneinander gereihten Plattenelemente 31 verbindenden Zwischenraum 60 zwischen zwei zueinander distanzierten Wandelementen 52, 53, welche jeweils die gegenüberliegenden Wandflächen 46, 54 der Plattenelemente 31 bilden, vor Ort eingegossen wurde und nachfolgend aushärtet. Anstelle des Einsatzes von Fließbeton 55 für den Kern der Plattenelemente 31 ist es auch möglich, selbsttätig aushärtenden Fließbeton 55 zur dauerhaften und luftdichten Verbindung der Stirn- bzw. Schmalseiten der aneinander gereihten Beton-Plattenelemente 31 zu verwenden, wie dies in Zusammenhang mit Fig. 9 dargelegt ist.

Zur raschen und positionsgenauen Ausrichtung der Plattenelemente 31 weisen diese wenigstens ein Lastaufnahmemittel 61, insbesondere einen Haken, eine Öse oder einen Steg zur Verbindung mit einem Anschlagmittel, insbesondere einer Kette, einem Hebeband oder einem Seil auf. Dadurch wird eine einfache und sichere Versetzung und Positionierung mittels eines Lastenkrans ermöglicht.

Entsprechend einer vorteilhaften Ausführungsform ist das Lastaufnahmemittel 61 der Plattenelemente 31 durch die Bewehrung 57 aus Eisen definiert, welche Bewehrung 57 zwischen den auf Distanz 59 zueinander gehalterten Wandteilen 52, 53 der Plattenelemente 31 ausgebildet ist und die Wandteile 52, 53 derart zueinander distanziert hält.

Wie in Fig. 6 phantomartig angedeutet wurde, ist das Gehäuse 2 ist zur Aufnahme einer Mehrzahl von Filterelementen 8, insbesondere von Schlauchfilterelementen, vorgesehen. Solche Schlauchfilterelemente umfassen einen luftdurchlässigen, die abzuscheidenden Partikel jedoch zurückhaltenden Filterstrumpf und einen darin eingesetzten, korbartigen Stützkörper, wobei der Stützkörper an der Trennplatte 5 lastübertragend gehaltert ist. Die Filterelemente 8 innerhalb des Gehäuses 2 weisen eine axiale Länge 62 von mehr als 2 Meter, insbesondere eine axiale Länge 62 von 2 Meter bis 10 Meter auf. Diese Filterelemente 8 sind ausgehend von der Trennplatte 5 an ihrem oberen, axialen Ende aufgehängt und erstrecken sich in vertikaler Richtung nach unten, insbesondere innerhalb der Schmutzluftkammer 6.

Bei einem Aufbau mit quaderförmigen Plattenelementen 31 entsprechend den Fig. 1-9 ist es ebenso möglich, in Bezug auf die Vertikalrichtung mehrere Plattenelemente 31 übereinander zu setzen.

Eine obere Begrenzung bzw. ein oberer Abschluss des Gehäuses 2, insbesondere ein Dach- bzw. Deckelelement 65 des Gehäuses 2 kann aus Eisen, insbesondere aus Stahlblech gebildet sein. Entsprechend einer vorteilhaften Ausführungsform gemäß den Fig. 1 und 6 ist das Dach- bzw. Deckelelement 65 durch zumindest ein Tafelelement aus Well- oder Trapezblech gebildet. Das Dach- bzw. Deckelelement 65 erfüllt dabei primär die Funktion eines Witterungsschutzes für den Innenraum des Gehäuses 2, insbesondere für dessen Funktionsbaugruppen, wie z.B. das Filterungsmodul 9 mit den zahlreichen Filterelementen 8, wie sie in Fig. 6 ersichtlich sind.

In Fig. 9 ist eine weitere Ausführungsvariante zur dauerhaften und zuverlässigen Verbindung zweier aneinander gereihter Plattenelemente 31 aus Beton veranschaulicht. Hierbei sind die einander zugewandten Schmal- bzw. Stirnseiten der aneinander gesetzten Plattenelemente 31 mit wenigstens einer Nut 66 versehen, wobei die Nuten 66 von aneinander gereihten Plattenelementen 31 einen Zwischenraum 60 bilden, welcher mit ursprünglich fließfähigem Fließbeton 55 ausgefüllt wird und welcher Fließbeton 55 nach der Aushärtung eine stabile Verbindung zwischen den jeweiligen Plattenelementen 31 bildet. Zur Erhöhung der Verbindungsfestigkeit kann im Zwischenraum 60 zwischen den Schmalseiten der Plattenelemente 31 eine Bewehrung 57 vorgesehen sein, wie dies in strichlierten Linien angedeutet wurde. An den Schmalseiten der vorgefertigten Plattenelemente 31 kann dabei eine integrale Bewehrung 57 in die Nut 66 vorragen, welche vor Ort, insbesondere am Aufstellungsort der Filtervorrichtung 1 - Fig. 1 - mit Fließbeton 55 ausgegossen wird, um eine hochstabile und zudem luftdichte Verbindung zwischen den aneinander gereihten Plattenelementen 31 aus Beton sicherzustellen. Auch hierdurch können kurze Aufbauzeiten und relativ problemlos ausreichend luftdichte Gehäuse 2 für großindustrielle Filtervorrichtungen 1 - Fig. 1 - erzielt werden.

Das Gehäuse 2 aus einzelnen Beton-Plattenelementen 31 bietet neben verbesserter Schalldämmwirkung, Temperatur-, Korrosions- und Säurebeständigkeit auch Vorteile hinsichtlich der modularen Erweiterbarkeit einer bestimmten Filtervorrichtung 1. Insbesondere kann durch einfaches Andocken von wenigen Plattenelementen 31 an ein bestimmtes Gehäuse 2 eine effiziente Erweiterung der Funktionalität der Filtervorrichtung 1 erreicht werden. Beispielsweise kann durch Anreihung eines im Querschnitt im Wesentlichen U-förmigen Plattenverbundes auf der Rohgasseite der Filtervorrichtung 1 eine Vorabscheidekammer für relativ schwere bzw. große Partikel und/oder eine Mischkammer zur Vermischung von Heißgas und Umgebungsluft, eine Explosionsschutz-Kammer zur Absicherung gegenüber explosionsartigen Rückschlägen, eine Kammer zur Funkenabscheidung, und dergleichen ausgebildet sein. Auf der Reingas- bzw. Austrittsseite für gefilterte Gas- bzw. Luftströmungen kann ebenso durch einfaches Anfügen von wenigen, insbesondere U-förmig ausgerichteten Plattenelementen 31 ein Anbau eines Abluftkamins, eines Stiegenhausabschnittes, einer Umhausung zur Reduzierung der Lärmemissionen eines Absaugungsgebläses und/oder einer Wärmetauscherzone vorgenommen werden. Insbesondere wird durch die Bauweise aus vorgefertigten BetonPlattenelementen 31 die modulare Erweiterbarkeit eines bestehenden Beton-Gehäuses 2 mit zusätzlichen Funktions- bzw. Anlagenteilen vereinfacht.

Entsprechend einer vorteilhaften Ausführungsform kann die untere Modulebene 16 - Fig. 6 - ebenso durch wenigstens ein Plattenelement 31 aus Beton gebildet sein. In dieser unteren Modulebene 16 ist die Sammel- und/oder Austragungsvorrichtung 13 vorgesehen, welche beispielsweise ein hydraulisch oder elektromotorisch verstellbares Räum- bzw. Schieberelement umfasst. Mittels diesem Räum- bzw. Schieberelement sind dabei an zumindest einem den Bodenabschnitt des Gehäuses 2 bildenden Beton-Plattenelement 31 angesammelte Partikel bzw. Stäube aus dem Inneren des Gehäuses 2 ausstoß- bzw. ausschiebbar. Durch dieses zwangsweise Ausschieben von angesammelten Partikeln mittels einem Räumschild bzw. Schieberelement können auch durchnässte bzw. teigige Partikelansammlungen sicher aus dem Gehäuse 2 abtransportiert werden. Dieses Schieberelement kann dabei an den Boden-Plattenelementen 31 des Gehäuses 2 gleitend geführt sein und für einen bedarfsweisen, azyklischen oder periodischen Austrag von angesammelten Partikeln bzw. pastösen oder teigigen Staubansammlungen sorgen.

Die Ausführungsbeispiele zeigen mögliche Ausführungsvarianten der Filtervorrichtung 1 bzw. dessen Gehäuse 2, wobei an dieser Stelle bemerkt sei, dass die Erfindung nicht auf die speziell dargestellten Ausführungsvarianten derselben eingeschränkt ist.

Der Ordnung halber sei abschließend darauf hingewiesen, dass zum besseren Verständnis des Aufbaus der Filtervorrichtung 1 bzw. dessen Gehäuse 2 diese bzw. deren Bestandteile teilweise unmaßstäblich und/oder vergrößert und/oder verkleinert dargestellt wurden.

## Patentansprüche

1. Filtervorrichtung (1) zur Reinigung eines mit Partikeln beladenen Luftstroms, umfassend ein Gehäuse (2) mit einem Mantelabschnitt (25), eine Lufteintrittsöffnung (3) für verunreinigte Luft, eine Luftaustrittsöffnung (4) für gefilterte Luft, eine Trennplatte (5), die das Gehäuse (2) in eine Schmutzluftkammer (6) und in eine Reinluftkammer (7) unterteilt, und wenigstens ein Filterelement (8), welches an der Trennplatte (5) derart gehaltert ist, dass es in die Schmutzluftkammer (6) ragt und eine filternde Luftströmungsverbindung zwischen der Schmutzluftkammer (6) und der Reinluftkammer (7) aufbaut, wobei in einer untersten bzw. niedrigsten Modulebene (16) des Gehäuses (2) eine Sammel- und/oder Austragungsvor-richtung (13) gehaltert ist, welche Sammel- und/oder Austragungsvorrichtung (13) eine trogoder trichterartige Auffangwanne (14) oder einen unteren Auffangboden mit wenigsten einem Plattenelement (31) aus Beton umfasst und welche Sammel- und/oder Austragungsvorrichtung (13) wahlweise eine Fördervorrichtung (15) umfasst, sodass die in der untersten Modulebene (16) anfallenden Partikel sammelbar und bei vorhandener Fördervorrichtung (15) bei Bedarf automatisiert oder teilweise automatisiert abförderbar bzw. aus der Filtervorrichtung (1) entfernbar sind, und wobei oberhalb der untersten Modulebene (16) eine weitere Modulebene (17) vorgesehen ist, in welcher ein Filterungsmodul (9) gehaltert ist, und wobei zumindest der Mantelabschnitt (25) des Gehäuses (2), welcher eine Mehrzahl von Begrenzungswänden (26-29) des Gehäuses (2) umfasst, durch aneinander gereihte Plattenelemente (31) aus Beton gebildet ist und ein hohles, quaderförmiges Gehäuse (2) bildet, **dadurch gekennzeichnet, dass** das Filterungsmodul (9), welches zumindest die Trennplatte (5) umfasst, in das Gehäuse (2) eingesetzt und im Inneren des Gehäuses (2) befestigt ist, wobei zur Halterung der Trennplatte (5) im Inneren des Gehäuses (2) zumindest ein Plattenelement (31) wenigstens eine integral verankerte, insbesondere eine partiell eingegossene Eisenplatte (50) zum Anschweißen oder Anschrauben von Rahmen- bzw. Trägerelementen (51) der Trennplatte (5) aufweist.

2. Filtervorrichtung nach Anspruch 1, **dadurch gekennzeichnet, dass** die Eisenplatte (50) zur inneren Wandfläche (46) des Plattenelementes (31) stufenlos, insbesondere flächenbündig ausgerichtet ist.

3. Filtervorrichtung nach Anspruch 1, **dadurch gekennzeichnet, dass** die Plattenelemente (31) durch nach Bauplan vorproduzierte Betonfertigteile gebildet sind.

4. Filtervorrichtung nach Anspruch 1, **dadurch gekennzeichnet, dass** in wenigstens einem Plattenelement (31) eine Aussparung (34) oder ein Durchbruch zur Bildung eines Wartungs- oder Reinigungszugangs (35) ausgebildet ist.

5. Filtervorrichtung nach Anspruch 1, **dadurch gekennzeichnet, dass** die durch mehrere Plattenelemente (31) gebildeten Begrenzungswände (26-29) oder Mantelteilflächen des Gehäuses eine Breite (22) von mehr als 3 Metern und eine Höhe (23) von mehr als 2 Metern aufweisen.

6. Filtervorrichtung nach Anspruch 1, **dadurch gekennzeichnet, dass** innerhalb des Gehäuses (2) zumindest eine vertikal ausgerichtete Trennwand (36) angeordnet ist, welche durch wenigstens ein Plattenelement (31) aus Beton gebildet ist.

7. Filtervorrichtung nach Anspruch 6, **dadurch gekennzeichnet, dass** die Trennwand (36) durch eine Mehrzahl von aneinander gereihten Plattenelementen (31) gebildet ist und jedes der Plattenelemente (31) zumindest einen Durchbruch (37, 38) aufweist.

8. Filtervorrichtung nach Anspruch 1, **dadurch gekennzeichnet, dass** das Gehäuse (2) zur Aufnahme einer Mehrzahl von Filterelementen (8), insbesondere von Schlauchfilterelementen umfassend einen luftdurchlässigen Filterstrumpf und einen darin eingesetzten, korbartigen Stützkörper ausgebildet ist, wobei die Trennplatte (5) oder mehrere aneinander gelegte Plattenteile zur Vergrößerung der Trennplatte (5) in Verbindung mit dem Rahmen- bzw. Trägerelement (51) eine modulare Funktionsbaugruppe der Filtervorrichtung (1) bildet bzw. bilden.

9. Filtervorrichtung nach Anspruch 1, **dadurch gekennzeichnet, dass** die Filterelemente (8) eine axiale Länge (62) von mehr als 2 Meter, insbesondere eine axiale Länge von 2 Meter bis 10 Meter aufweisen und ausgehend von der Trennplatte (5) an ihrem oberen axialen Ende aufgehängt sind und sich in vertikaler Richtung nach unten erstrecken.

10. Filtervorrichtung nach Anspruch 1, **dadurch gekennzeichnet, dass** in deren Gehäuse (2) oberhalb der Trennplatte (5) ein Service- bzw. Wartungsraum (20) zumindest mit Personenhöhe, insbesondere mit mehr als 1,60 Meter Höhe ausgebildet ist.

## Claims

1. Filter device (1) for cleaning an air stream loaded with particles, comprising a housing (2) having a casing section (25), an air inlet opening (3) for unclean air, an air outlet opening (4) for filtered air, a separating plate (5) which divides the housing (2) into a dirty air chamber (6) and a clean air chamber (7), and at least one filter element (8), which is mounted on the separating plate (5) such that it projects into the dirty air chamber (6) and creates a filtering flow connection between the dirty air chamber (6) and the clean air chamber (7), with a collecting and/or removal device (13) being mounted in a lowest or bottom module level (16) of the housing (2), which collecting and/or removal device (13) comprises a tub- or funnel-like collecting pan (14) or a lower collecting bottom having at least one plate element (31) made of concrete, and which collecting and/or removal device (13) optionally comprises a conveying device (15) so that the particles accumulating in the lowest module level (16) can be collected and, if a conveying device (15) is existent, can be conveyed in an automated or partially automated way as needed or can be removed from the filter device (1), and with another module level (17) being provided above the lowest module level (16) wherein a filter module (9) is mounted, and with at least the casing section (25) of the housing (2) which comprises a plurality of delimiting walls (26-29) of the housing (2) being formed by plate elements (31) which are positioned next to one another and are made of concrete and forming a hollow, box-shaped housing (2), **characterized in that** the filter module (9) comprising at least the separating plate (5) is inserted into the housing (2) and fixed inside the housing (2), and at least one plate element (31) has at least one integrally fixed, in particular integrally casted iron plate (50) for welding or screwing frame or carrier elements (51) of the separating plate (5), for holding the separating plate (5) inside the housing (2).

2. Filter device according to claim 1, **characterized in that** the iron plate (50) is aligned to be stepless, in particular flush with the interior wall face (46) of the plate element (31).

3. Filter device according to claim 1, **characterized in that** the plate elements (31) are formed by precast concrete elements preproduced according to constructional plan.

4. Filter device according to claim 1, **characterized in that** a recess (34) or a breakthrough for the creation of a maintenance or cleaning access (35) is embodied in at least one plate element (31).

5. Filter device according to claim 1, **characterized in that** the delimiting walls (26-29) or partial faces of the casing of the housing formed by a plurality of plate elements (31) have a width (22) of more than 3 meters and a height (23) of more than 2 meters.

6. Filter device according to claim 1, **characterized in that** at least one vertically oriented separating wall (36) which is formed by at least one plate element (31) made of concrete is arranged inside the housing (2).

7. Filter device according to claim 6, **characterized in that** the separating wall (36) is formed by a plurality of plate elements (31) positioned one next to another and that each plate element (31) has at least one breakthrough (37, 38).

8. Filter device according to claim 1, **characterized in that** the housing (2) is designed for accommodating a plurality of filter elements (8), in particular of hose filter elements comprising an air-permeable filter sock and a therein arranged basket-like support body, with the separating plate (5) or several plate elements positioned one next to another for enlarging the separating plate (5) forming in connection with the frame or carrier element (51) a modular functional assembly of the filter device (1).

9. Filter device according to claim 1, **characterized in that** the filter elements (8) have an axial length (62) of more than 2 meters, in particular an axial length of 2 meters to 10 meters, and are originating from the separating plate (5) hung up with their upper axial end and extend in downward in vertical direction.

10. Filter device according to claim 1, **characterized in that** in its housing (2) above the separating plate (5), a service or maintenance space (20) is embodied at least at a person's height, in particular at a height of more than 1.60 meters.

## Revendications

1. Dispositif de filtrage (1) pour épurer un flux d'air chargé de particules, comprenant un boîtier (2) avec un tronçon d'enveloppe (25), une ouverture d'entrée d'air (3) pour de l'air vicié, une ouverture de sortie d'air (4) pour l'air filtré, une plaque de séparation (5) qui divise le boîtier (2) en une chambre d'air vicié (6) et une chambre d'air pur (7), et au moins un élément filtrant (8) qui est retenu sur la plaque de séparation (5) de telle sorte qu'il fait saillie dans la chambre d'air vicié (6) et constitue un raccordement d'écoulement d'air filtrant entre la chambre d'air vicié (6) et la chambre d'air pur (7), un dispositif collecteur et/ou d'évacuation (13) étant retenu dans un niveau de module (16) du boîtier (2) le plus inférieur ou respectivement le plus bas, lequel dispositif collecteur et/ou d'évacuation (13) comprend une cuve de récupération (14) en forme d'auge ou d'entonnoir ou un fond de récupération inférieur avec au moins un élément de panneau (31) en béton, et lequel dispositif collecteur et/ou d'évacuation (13) comprend au choix un dispositif de transfert (15) de telle sorte que les particules présentes dans le niveau de module (16) le plus inférieur peuvent être collectées et, en cas de présence d'un dispositif de transfert (15), peuvent être évacuées en cas de besoin de façon automatisée ou partiellement automatisée ou respectivement être enlevées du dispositif de filtrage (1), et un autre niveau de module (17) étant prévu au-dessus du niveau de module (16) le plus inférieur dans lequel est retenu un module de filtrage (9), et au moins le tronçon d'enveloppe (25) du boîtier (2), qui comprend une pluralité de parois de délimitation (26-29) du boîtier (2), étant formé d'éléments de panneaux (31) en béton juxtaposés et formant un boîtier (2) creux et carré, caractérisé en le module de filtrage (9), qui comprend au moins la plaque de séparation (5), est inséré dans le boîtier (2) et est fixé à l'intérieur du boîtier (2), au moins un élément de panneau (31) présentant, pour retenir la plaque de séparation (5) à l'intérieur du boîtier (2), au moins une plaque en fer (50) ancrée intégralement, en particulier partiellement coulée, pour le soudage ou le vissage d'éléments de cadre ou respectivement de support (51) de la plaque de séparation (5).

2. Dispositif de filtrage selon la revendication 1, caractérisé en que la plaque en fer (50) est orientée vers la face de paroi (46) interne de l'élément de panneau (31) de façon progressive, en particulier à fleur de surface.

3. Dispositif de filtrage selon la revendication 1, caractérisé en que les éléments de panneau (31) sont formés par des éléments préfabriqués en béton produits préalablement selon des plans de construction.

4. Dispositif de filtrage selon la revendication 1, caractérisé en que, dans au moins un élément de panneau (31), il est constitué un évidement (34) ou une traversée pour la formation d'un accès destiné à la maintenance ou au nettoyage (35).

5. Dispositif de filtrage selon la revendication 1, caractérisé en que les parois de délimitation (26-29) ou faces partielles d'enveloppe du boîtier formées par plusieurs éléments de panneau (31) présentent une largeur (22) de plus de 3 mètres et une hauteur (23) de plus de 2 mètres.

6. Dispositif de filtrage selon la revendication 1, caractérisé en que, à l'intérieur du boîtier (2), il est disposé au moins une cloison (36) orientée verticalement qui est formée d'au moins un élément de panneau (31) en béton.

7. Dispositif de filtrage selon la revendication 6, caractérisé en que la cloison (36) est formée d'une pluralité d'éléments de panneau (31) juxtaposés et en chacun des éléments de panneau (31) présente au moins une traversée (37, 38).

8. Dispositif de filtrage selon la revendication 1, caractérisé en que le boîtier (2), pour la réception d'une pluralité d'éléments filtrants (8), est en particulier constitué d'éléments de filtres à manches comprenant un manchon filtrant laissant passer l'air et un corps d'appui de type corbeille qui y est inséré, la plaque de séparation (5) ou plusieurs parties de plaque placées côté à côte formant, pour l'agrandissement de la plaque de séparation (5) en association avec l'élément de cadre ou respectivement de support (51), un ensemble fonctionnel modulaire du dispositif de filtrage (1).

9. Dispositif de filtrage selon la revendication 1, caractérisé en que les éléments filtrants (8) présentent une longueur axiale (62) de plus de 2 mètres, en particulier une longueur axiale de 2 mètres à 10 mètres, et sont, en partir de la plaque de séparation (5), accrochés au niveau de leur extrémité axiale supérieure et s'étendent en direction verticale vers le bas.

10. Dispositif de filtrage selon la revendication 1, caractérisé en que, dans son boîtier (2) au-dessus de la plaque de séparation (5), il est constitué un espace de service ou respectivement de maintenance (20) ayant au moins la hauteur d'une personne, en particulier une hauteur supérieure à 1,60 mètre.
